# EUROPÄISCHE PATENTSCHRIFT

(11) **EP 1 744 531 B1**
(45) Veröffentlichungstag und Bekanntmachung des Hinweises auf die Patenterteilung: **01.09.2010**
(21) Anmeldenummer: 06011820.5
(22) Anmeldetag: 08.06.2006
(51) Int. Cl.: H04M 3/18, H02H 9/04

(54) **Schutzschaltung für eine Einrichtung zur Einkopplung einer Fernspeisespannung**
Protection device for a system providing a supply voltage to a communication line
Dispositif de protection pour un système d'alimentation pour une ligne de communication

(30) Priorität: 27.06.2005 DE 102005029867
(43) Veröffentlichungstag der Anmeldung: 17.01.2007
(73) Patentinhaber: Nokia Siemens Networks GmbH & Co. KG, 81541 München (DE)
(72) Erfinder: Alms, Henrik, 18516 Kreutzmannhagen (DE); Richter, Frank-Dieter, 17489 Greifswald (DE); Hälbig, Karl-Dietrich, 17493 Greifswald (DE)

(56) Entgegenhaltungen:
- EP-A- 0 372 673
- WO-A-00/63974
- US-A- 3 600 634
- US-A1- 2003 053 276

## Beschreibung

Die vorliegende Erfindung betrifft eine Schutzschaltung für Speisemodule nach dem Oberbegriff des Patentanspruchs 1 bzw. 4.

Bei speisenden Einrichtungen, insbesondere bei fernspeisenden Einrichtungen wie z.B. bei der Fernspeisung von ISDN-Netzabschlüssen bei DSL-Einrichtungen oder bei gefritteten Einrichtungen, tritt das Problem auf, dass die fernspeisenden Leitungen erheblich mit Fremdspannungen, bzw. Fremdströmen belastet sein können. Ursachen dafür können beispielsweise Induktion oder Blitzeinschlag sein.

Damit Fremdspannungen und Fremdströme nicht zu einer Schädigung der Einrichtung, insbesondere des Speisemoduls oder des Interfacemoduls, führen, müssen Schutzschaltungen implementiert werden. Die Schutzschaltungen sind aufgrund der Niederohmigkeit und der meist fehlenden galvanischen Trennung der Speisemodule von den fernspeisenden Leitungen aufwändig ausgebildet und bedürfen meist grosser Bauelemente, um die Fremdspannungen abzubauen. Auch bedürfen die Schutzschaltungen normalerweise hochohmiger Komponenten, welche Nachteile, wie z.B. eine höhere Verlustleistung oder eine höhere Speisespannungstoleranz zur Folge haben. Ein weiterer Nachteil ist, dass die bekannten Lösungen nicht zuverlässig gegen mögliche kurzzeitige Spannungsspitzen und Inversspannungen schützen, die Thyristorisierungseffekte zur Folge haben und/oder Beschädigungen des Speisemoduls hervorrufen können.

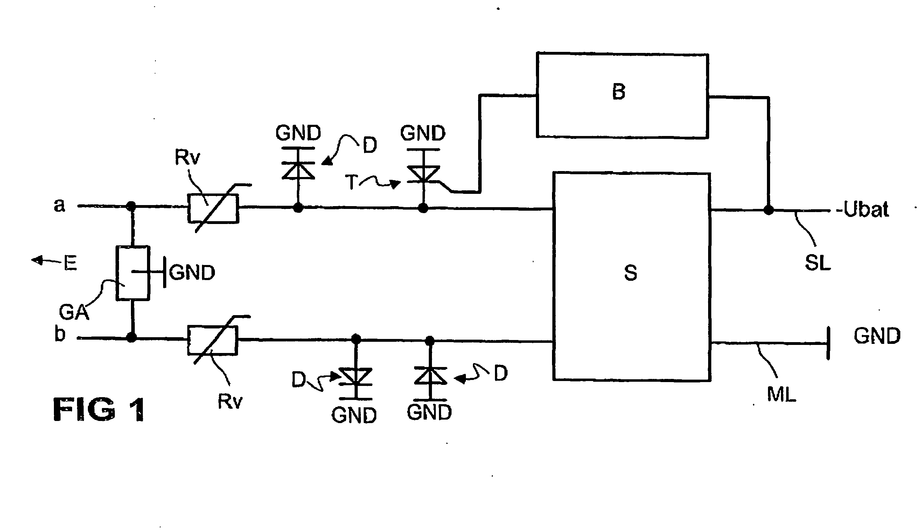

Figur 1 zeigt ein Beispiel einer herkömmlichen Schutzschaltung, wie sie für ISDN- und DSL-Einrichtungen verwendet wird, zusammen mit einem Speisemodul S. Das Speisemodul S wird über einen Speiseleiter SL von einer Spannungsquelle mit einer konstanten negativen Spannung -Ubat gespeist. Zudem ist das Speisemodul über eine Masseleitung ML mit der Masse GND verbunden. Für eine Fernspeisung einer abgesetzten Einrichtung, wie zum Beispiel eines ISDN-Abschlussgerätes, führen vom Speisemodul S eine erste Ader a und eine zweite Ader b weg. Die erste Ader a ist innerhalb des Speisemoduls S über eine Halbleiterschaltung, mit der Speiseleitung SL verbunden (nicht dargestellt). Während des normalen Betriebes liegt an der ersten Ader a eine negative Spannung an, welche weniger negativ als die Eingansspannung -Ubat ist. Für ISDN beträgt -Ubat beispielsweise -95 v und die Spannung auf der ersten Ader a -94 V. Die zweite Ader b ist innerhalb des Speisemoduls S normalerweise über mindestens ein niederohmigen Widerstandselement mit der Masse verbunden. Dieses Widerstandselement weist den gleichen elektrischen Widerstand auf, wie die Halbleiterschaltung im Speisemodul für die zweite Ader b, damit Übersprecheffekte verhindert werden können. In einfacheren Anwendungen ist die zweite Ader b direkt, d.h. ohne widerstand zur Herstellung der Symmetrie mit der Masse GND verbunden.

Ein Gasableiter GA, welcher zwischen die erste Ader a und die zweite Ader b geschaltet und mit Masse GND verbunden ist, dient als Grobschutz. Typische Reaktionszeiten eines Gasableiters liegen im einstelligen Mikrosekundenbereich. Je nach Anstiegszeit einer Fremdspannung, baut ein Gasableiter typischerweise positive und negative Fremdspannungen mit einem Absolutbetrag oberhalb von einigen hundert Volt für langsam ansteigende Fremdspannungen oder oberhalb von etwa einem Kilovolt für schnell (im Mikrosekundenbereich) ansteigende Fremdspannungen ab. Mit andern Worten: Der Gasableiter stellt sicher, dass auf den beiden Adern a, b keine Spannungen ausserhalb des beispielsweisen Intervalls von -1000V bis +1000V zustande kommen.

Positive Fremdspannungen auf der ersten Ader a und auf der zweiten Ader b, sowie negative Fremdspannungen auf der zweiten Ader b, für welche der Gasableiter GA nicht zündet, werden über je eine in geeigneter Richtung verschaltete Diode D gegen Masse GND abgebaut.

Eine Spannungsumkehr auf der Halbleiterschaltung, welche die erste Ader a mit der Speiseleitung SL verbindet kann zu einer Thyristorisierung und somit zu einer Zerstörung der Halbleiterschaltung führen. In dem in Figur 1 angegebenen Beispiel, mit einer negativen Spannung auf der Speiseleitung SL und einer weniger negativen Spannung auf der ersten Ader a, tritt dann eine Spannungsumkehr auf der Halbleiterschaltung auf, wenn die Spannung auf der ersten Ader a negativer ist als die Spannung auf der Speiseleitung SL. Aus diesem Grund wird zum Schutz von negativen Fremdspannungen, für welche der Gasableiter GA nicht zündet, auf der ersten Ader nicht eine weitere Diode verwendet, sondern ein Schaltelement T, üblicherweise ein Thyristor oder ein Trisil, welches die Spannung gegen Masse GND abgebaut. Das Schaltelement wird mittels einer Beschleunigerschaltung B, welche im wesentlichen ein Verstärker ist, von der Spannung oder dem Strom auf der Speiseleitung (SL) angesteuert.

Zur Aufnahme von abzubauender Leistung ist in Richtung abgesetzte Einrichtung hinter den Dioden D und dem Trisil T in die erste Ader a ein erstes Widerstandselement Rv1 und in die zweite Ader b ein zweites Widerstandselement Rv2 geschaltet. Um den Nachteil hochohmiger Komponenten zu umgehen, sind neuerdings auch Lösungen bekannt, die anstelle der linearen keramischen Widerstände Rv1 und Rv2 niederohmige Widerstände mit positivem Temperaturkoeffizienten verwenden. Diese erhitzen sich bei längerer ausreichend hoher Strombelastung und werden sehr hochohmig, so dass der parasitäre Fremdstrom praktisch unterbunden wird. Die Dauer, bis zur Erreichung der Hochohmigkeit ist jedoch zu lang, als dass diese Widerstände das Speisemodul S vor kurzfristigen Fremdspannungen schützen können, insbesondere vor negativen Fremdspannungen, welche zu einer Spannungsumkehr führen können.

Eine Diode, welche zum Abbau von negativen Fremdspannungen auf der ersten Ader a eingesetzt würde, hätte den Nachteil einer Dropspannung von der Grösse der Schwellenspannung der Diode. Diese Dropspannung würde die Spannung auf der ersten Ader a zusätzlich reduzieren. Aus diesem Grund werden normalerweise zum Abbau von negativen Fremdspannungen auf der ersten Ader a keine Dioden, sondern Thyristoren oder Trisile verwendet. Diese erzeugen ein geringeres elektrisches Feld als Dioden, insbesondere beim Vorhandensein von starken elektrischen Strömen. Zudem bricht das elektrische Feld eines Thyristors oder eines Trisils zusammen, sobald der Thyristor oder das Trisil zündet.

Da jedoch ein Schaltelement T eine bestimmte Zeit benötigt um zu zünden, können kurzzeitig negativere Spannungen auf der ersten Ader a auftreten als -Ubat. Um den Nachteil der kurzzeitigen Inversspannungen zu vermindern, sind Beschleunigerschaltungen zum schnellen Zünden des Schaltelementes T bekannt, die aber nur die Zeit bis zum Zünden des Schaltelementes T vermindern, aber nicht eine Inversspannung an sich zuverlässig vermeidet.

Die Schaltung von Figur 1 weist zudem den Nachteil auf, dass die Diode D zum Abbau von positiven Fremdspannungen auf der ersten Ader a erst schaltet, wenn die Spannung auf der ersten Ader positiver ist, als die Masse GND. Für ISDN-Einrichtungen bedeutet dies, dass Spannungen auf der ersten Ader in einem Bereich von etwa 0 bis -95 Volt nicht abgebaut werden.

EP-A-0 372 673 und DE 689 20 558 T2 offenbaren eine Schutzschaltung, welche Fremdspannungen auf einer Ader über ein Triac gegen Masse ableitet. Das Triac wird über ein Widerstandselement, welches in die Ader geschaltet ist, gezündet. Um Fremdspannungen abzubauen, welche nicht über das Triac abgebaut werden, ist die Ader über eine Spannungsklemmeinrichtung auf eine Spannung zwischen einer ersten Spannung und einer zweiten Spannung geklemmt. Diese Ausführungsform hat den Nachteil, dass die Ableitung von Fremdströmen auf eine Betriebsspannung benachbarte Kanäle des Speisemoduls beeinflussen kann. Zudem ist die Auswahl der zu verwendenden Bauelemente der Schaltungsanordnung beschränkt, da insbesondere durch die Ableitung von Fremdströmen über die Spannungsklemmeinrichtung entstehende Potentialverschiebungen, die bei höheren Strömen an den Anschlüssen des Speisemoduls auftreten, das Speisemodul beschädigen können. Die genannten Nachteil wirken sich besonders aus, wenn die Schaltungsanordnung niederohmig an die Adern geschaltet ist, wie es insbesondere bei ISDN-Einrichtungen der Fall ist.

Der vorliegenden Erfindung liegt daher die Aufgabe zugrunde eine Schaltungsanordnung zu ermöglichen, welche ein elektronisches Modul zuverlässig vor Fremdspannungen und Fremdströmen schützt.

Diese Aufgabe wird durch die im Patentanspruch 1, bzw. 4 angegebenen Massnahmen gelöst. Vorteilhafte Ausgestaltungen der Erfindung sind in weiteren Ansprüchen angegeben.

Dadurch, dass
- das erste Schaltelement einen ersten Anschluss zum Schalten des ersten Schaltelementes umfasst, welcher an die erste Ader in Richtung abgesetzte Einrichtung vor dem ersten Widerstandselement angeschlossen ist;
- das erste Schaltelement eingeschaltet wird, wenn der Absolutwert der Spannung über dem ersten Widerstandselement einen ersten Schwellwert übersteigt;
- ein in Richtung abgesetzte Einrichtung vor dem ersten Widerstandselement angeordnetes erstes Gleichrichtelement in die erste Ader geschaltet ist, welches elektrischen Strom in Richtung zu der abgesetzten Einheit blockiert, kann ein elektronisches Modul, insbesondere ein Speisemodul zuverlässig vor Fremdspannungen und Fremdströmen geschützt werden.

Einrichtungen, wie zum Beispiel ISDN-Einrichtungen, deren erste Ader mit einer negativen Spannung versorgt wird, wobei die Versorgung über eine Speiseleitung vorgenommen wird, an welcher eine nur geringfügig stärkere negative Spannung anliegt als an der ersten Ader, können auf diese Weise vor negativen Fremdspannungen und somit vor einer Spannungsumkehr, insbesondere auch vor einer kurzfristigen Spannungsumkehr, über einem Speisemodul, welches die erste Ader mit einer Speiseleitung verbindet, geschützt werden.

Das erste Gleichrichtelement, welches zum Beispiel eine Diode, oder auch eine Schaltung mit mehreren Dioden sein kann, verhindert effizient, auch bei einem schnellen Anstieg einer negativen Fremdspannung, eine Spannungsumkehr über dem Speisemodul. Eine negative Fremdspannung, welche auf der ersten Ader eine Spannung erzeugt, welche oberhalb der Durchbruchspannung des ersten Schaltelementes liegt, wird zudem aufgrund des Durchbruchs über das erste Schaltelement gegen Masse abgebaut. Auf diese Weise kann das erste Gleichrichtelement vor einer negativen Fremdspannung, welche aufgrund einer zu hohen Stärke das erste Gleichrichtelement zerstören würde, geschützt werden.

Eine positive Fremdspannung auf der ersten Ader, welche über dem ersten Widerstandselement einen ausreichend grossen Spannungsabfall erzeugt, sodass der Spannungsabfall zu einem Einschalten des ersten Schaltelementes führt, wird ebenfalls über das erste Schaltelement abgebaut. Auf diese Weise kann das erste Gleichrichtelement und das Speisemodul vor positiven Fremdspannungen geschützt werden.

Dadurch, dass
ein in Richtung abgesetzte Einrichtung nach dem ersten Gleichrichtelement angeordnetes zweites Gleichrichtelement an die erste Ader angeschlossen und mit der Masse verbunden ist,
wobei das zweite Gleichrichtelement elektrischen Strom in Richtung von der Masse zu der ersten Ader blockiert,
kann ein elektronisches Modul, insbesondere ein Speisemodul vor Fremdspannungen, insbesondere vor rasch ansteigenden und/oder lange andauernden Fremdspannungen geschützt werden.

Bei geeigneter Beschaffenheit des zweiten Gleichrichtelementes und im Falle einer starken negativen Fremdspannung, kombiniert mit einem gleichzeitigen Versagen des ersten Schaltelementes, bricht das zweite Gleichrichtelement früher als das erste Gleichrichtelement durch, wodurch das Speisemodul vor der negativen Fremdspannung geschützt wird. Eine geeignete Beschaffenheit des zweiten Gleichrichtelementes ist zum Beispiel bei identischer Beschaffenheit wie das erste Gleichrichtelement gegeben, da das zweite Gleichrichtelement gegen Masse liegt und daher früher durchbricht als das erste Gleichrichtelement.

Ebenso kann eine positive Fremdspannung auf der ersten Ader über das zweite Gleichrichtelement abgebaut werden. Durch den erhöhten Strom erhöht sich der Spannungsabfall über dem ersten Widerstandselement, was zu einem schnelleren Einschalten des ersten Schaltelementes führt. Auf diese Weise kann das Speisemodul, das erste Widerstandselement und das erste und das zweite Gleichrichtelement von elektrischem Strom entlastet und vor einer Zerstörung bewahrt werden.

Dadurch, dass
ein drittes Gleichrichtelement in die zweite Ader geschaltet ist, welches elektrischen Strom in Richtung zum Speisemodul blockiert,
kann das Speisemodul vor positiven Fremdspannungen auf der zweiten Ader, insbesondere vor rasch ansteigenden positiven Fremdspannungen, geschützt werden.

Die Anordnung eines ersten Gleichrichtelementes auf der ersten Ader, welches elektrischen Strom in Richtung zu der abgesetzten Einheit blockiert und eines dritten Gleichrichtelementes auf der zweiten Ader, welches elektrischen Strom in Richtung zum Speisemodul blockiert, erlaubt nach wie vor den Betrieb einer Gleichstrom-Fernspeisung über die erste und die zweite Ader, bei welcher Fernspeisung an die erste Ader eine negative Spannung angelegt wird, während die zweite Ader, allenfalls über ein widerstandselement zur Verhinderung eines Übersprechens, mit der Masse verbunden ist.

Dadurch, dass
- das erste Schaltelement einen ersten Anschluss zum Schalten des ersten Schaltelementes umfasst, welcher an die erste Ader in Richtung abgesetzte Einrichtung vor dem ersten Widerstandselement angeschlossen ist;
- das erste Schaltelement eingeschaltet wird, wenn der Absolutwert der Spannung über dem ersten Widerstandselement einen ersten Schwellwert übersteigt;
- ein in Richtung abgesetzte Einrichtung vor dem ersten Widerstandselement angeordnetes erstes Gleichrichtelement in die erste Ader geschaltet ist, welches elektrischen Strom in Richtung zu dem Speisemodul blockiert, kann ein elektronisches Modul, insbesondere ein Speisemodul zuverlässig vor Fremdspannungen und Fremdströmen geschützt werden.

Einrichtungen, deren erste Ader mit einer positiven Spannung versorgt wird, wobei die Versorgung über eine Speiseleitung vorgenommen wird, an welcher eine nur geringfügig stärker positive Spannung anliegt als an der ersten Ader, können auf diese Weise vor positiven Fremdspannungen und somit vor einer Spannungsumkehr, insbesondere auch vor einer kurzfristigen Spannungsumkehr, über einem Speisemodul, welches die erste Ader mit einer Speiseleitung verbindet, geschützt werden.

Das erste Gleichrichtelement, welches zum Beispiel eine Diode, oder auch eine Schaltung mit mehreren Dioden sein kann, verhindert effizient, auch bei einem schnellen Anstieg einer positiven Fremdspannung, eine Spannungsumkehr über dem Speisemodul. Eine positive Fremdspannung, welche auf der ersten Ader eine Spannung erzeugt, welche oberhalb der Durchbruchspannung des ersten Schaltelementes liegt, wird zudem aufgrund des Durchbruchs über das erste Schaltelement gegen Masse abgebaut. Auf diese Weise kann das erste Gleichrichtelement vor einer positiven Fremdspannung, welche aufgrund einer zu hohen Stärke das erste Gleichrichtelement zerstören würde, geschützt werden.

Eine negative Fremdspannung auf der ersten Ader, welche über dem ersten Widerstandselement einen ausreichend grossen Spannungsabfall erzeugt, sodass der Spannungsabfall zu einem Einschalten des ersten Schaltelementes führt, wird ebenfalls über das erste Schaltelement abgebaut. Auf diese weise kann das erste Gleichrichtelement und das Speisemodul vor negativen Fremdspannungen geschützt werden.

Dadurch, dass
ein in Richtung abgesetzte Einrichtung nach dem ersten Gleichrichtelement angeordnetes zweites Gleichrichtelement an die erste Ader angeschlossen und mit der Masse verbunden ist,
wobei das zweite Gleichrichtelement elektrischen Strom in Richtung von der ersten Ader zu der Masse blockiert,
kann ein elektronisches Modul, insbesondere ein Speisemodul vor Fremdspannungen, insbesondere vor rasch ansteigenden und/oder lange andauernden Fremdspannungen geschützt werden.

Bei geeigneter Beschaffenheit des zweiten Gleichrichtelementes und im Falle einer starken positiven Fremdspannung, kombiniert mit einem gleichzeitigen Versagen des ersten Schaltelementes, bricht das zweite Gleichrichtelement früher als das erste Gleichrichtelement durch, wodurch das Speisemodul vor der positiven Fremdspannung geschützt wird. Eine geeignete Beschaffenheit des zweiten Gleichrichtelementes ist zum Beispiel bei identischer Beschaffenheit wie das erste Gleichrichtelement gegeben, da das zweite Gleichrichtelement gegen Masse liegt und daher früher durchbricht als das erste Gleichrichtelement.

Ebenso kann eine negative Fremdspannung auf der ersten Ader über das zweite Gleichrichtelement abgebaut werden. Durch den erhöhten Strom erhöht sich der Spannungsabfall über dem ersten Widerstandselement, was zu einem schnelleren Einschalten des ersten Schaltelementes führt. Auf diese Weise kann das Speisemodul, das erste Widerstandselement und das erste und das zweite Gleichrichtelement von elektrischem Strom entlastet und vor einer Zerstörung bewahrt werden.

Dadurch, dass
ein drittes Gleichrichtelement in die zweite Ader geschaltet ist, welches elektrischen Strom in Richtung zu der abgesetzten Einheit blockiert,
kann das Speisemodul vor negativen Fremdspannungen auf der zweiten Ader, insbesondere vor rasch ansteigenden negativen Fremdspannungen, geschützt werden.

Die Anordnung eines ersten Gleichrichtelementes auf der ersten Ader, welches elektrischen Strom in Richtung zu dem Speisemodul blockiert und eines dritten Gleichrichtelementes auf der zweiten Ader, welches elektrischen Strom in Richtung zu der abgesetzten Einheit blockiert, erlaubt nach wie vor den Betrieb einer Gleichstrom-Fernspeisung über die erste und die zweite Ader, bei welcher Fernspeisung an die erste Ader eine positive Spannung angelegt wird, während die zweite Ader, allenfalls über ein Widerstandselement zur Verhinderung eines Übersprechens, mit der Masse verbunden ist.

Dadurch, dass
in Richtung abgesetzte Einrichtung hinter dem ersten Schaltelement ein in die erste Ader geschaltetes zweites Widerstandselement angeordnet ist,
können Fremdspannungen, welche über das erste Schaltelement und/oder über das zweite Gleichrichtelement gegen Masse abgebaut werden, gezielt in Wärme umgesetzt werden.

Vorteilhaft ist die verwendung eines zweiten Widerstandselementes mit einem positiven Temperaturkoeffizienten. Dieses hat den vorteil, dass bei sehr starken und/oder bei langandauernden Fremdströmen das zweite Widerstandselement den elektrischen Strom auf der ersten Ader unterbricht.

Dadurch, dass die Schaltungsanordnung zusätzlich umfasst:
- ein in die zweite Ader geschaltetes und in Richtung abgesetzte Einrichtung hinter dem dritten Gleichrichtelement angeordnetes drittes Widerstandselement;
- ein in Richtung abgesetzte Einrichtung hinter dem dritten Widerstandselement mit der zweiten Ader verbundenes zweites Schaltelement, welches in eingeschaltetem zustand für elektrischen Strom von der Masse zu der zweiten Ader und/oder für elektrischen Strom von der zweiten Ader zu der Masse leitend ist,
wobei
- das zweite Schaltelement einen zweiten Anschluss zum Schalten des zweiten Schaltelementes umfasst, welches an die zweite Ader in Richtung abgesetzte Einrichtung vor dem dritten widerstandselement angeschlossen ist;
- das zweite Schaltelement eingeschaltet wird, wenn der Absolutwert der Spannung über dem dritten Widerstandselement einen zweiten Schwellwert übersteigt,
   können Fremdspannungen auf der zweiten Ader, insbesondere Fremdspannungen, welche aufgrund einer zu hohen Stärke oder einer zu langen Dauer das dritte Gleichrichtelement zerstören könnten, über das zweite Schaltelement gegen Masse abgebaut werden.

Bewirkt eine Fremdspannung einen erhöhten elektrischen Strom auf der zweiten Ader, so hat dies eine erhöhte Spannung über dem dritten Widerstandselement zur Folge, was ein Schalten des zweiten Schaltelements bewirken kann. Liegt aufgrund der Fremdspannung eine erhöhte Spannung auf der zweiten Ader an, jedoch kein erhöhter Strom, da die Fremdspannung entgegen der Sperrichtung des dritten Gleichrichtelementes wirkt, so kann die erhöhte Spannung, einen Durchbruch des zweiten Schaltelementes und somit eine Entlastung des dritten Gleichrichtelementes bewirken.

Dadurch, dass
in Richtung abgesetzte Einrichtung hinter dem zweiten Schaltelement ein in die zweite Ader geschaltetes viertes Widerstandselement angeordnet ist, können Fremdspannungen, welche über das zweite Schaltelement gegen Masse abgebaut werden, gezielt in Wärme umgesetzt werden.

Dadurch, dass
ein mit der Masse verbundener Gasableiter in Richtung abgesetzte Einrichtung hinter mindestens einem der Schaltelemente an die erste Ader angeschlossen ist, können sehr starke Fremdspannungen gezielt in Wärme umgesetzt werden.

Thyristoren und Trisile sind besonders kostengünstige, einfach herzustellende und einfach einbaubare Schaltelemente, die als erste Schaltelemente und/oder zweite Schaltelemente verwendet werden können. Werden zwei Thyristoren oder zwei Trisile antiparallel geschaltet, so ergibt sich ein Schaltelement, welches sowohl positive, als auch negative Fremdspannungen gegen Masse abbauen kann.

Dioden sind besonders kostengünstige, einfach herzustellende und einfach einbaubare Gleichrichtelemente, welche als erstes Gleichrichtelement und/oder als zweites Gleichrichtelement und/oder als drittes Gleichrichtelement verwendet werden können.

Um ein Übersprechen von Signalen, welche auf der ersten Ader und auf der zweiten Ader übertragen werden, zu verhindern, ist es vorteilhaft, wenn die erste und die zweite Ader identische Parameter, insbesondere einen identischen elektrischen Widerstand aufweisen. Daher ist es auch vorteilhaft, wenn das erste Gleichrichtelement und das dritte Gleichrichtelement identisch sind und/oder das erste Widerstandselement und das dritte Widerstandselement identisch sind und/oder das zweite Widerstandselement und das vierte Widerstandselement von gleicher Bauweise sind.

Ist das erste Gleichrichtelement T1 für elektrischen Strom von der Masse zu der ersten Ader und von der ersten Ader zu der Masse leitend, so wird das erste widerstandselement und das zweite Gleichrichtelement bei einem vorliegen von positiven und bei einem Vorliegen von Negativen Fremdspannungen von dem elektrischen Strom entlastet, wodurch eine Zerstörung im Falle von starken und/oder langandauernden Strömen vermieden werden kann.

Die Erfindung wird nachfolgend anhand der Zeichnung beispielsweise näher erläutert. Dabei zeigen:
- Figur 1: eine Schaltungsanordnung zum Schutz eines ISDN Speisemoduls nach dem Stand der Technik;
- Figur 2: eine erste Ausführungsform der Erfindung;
- Figur 3: zwei antiparallel verschaltete Thyristoren, welche als erstes Schaltelement und als zweites Schaltelement dienen können und
- Figur 4: eine zweite Ausführungsform der Erfindung.

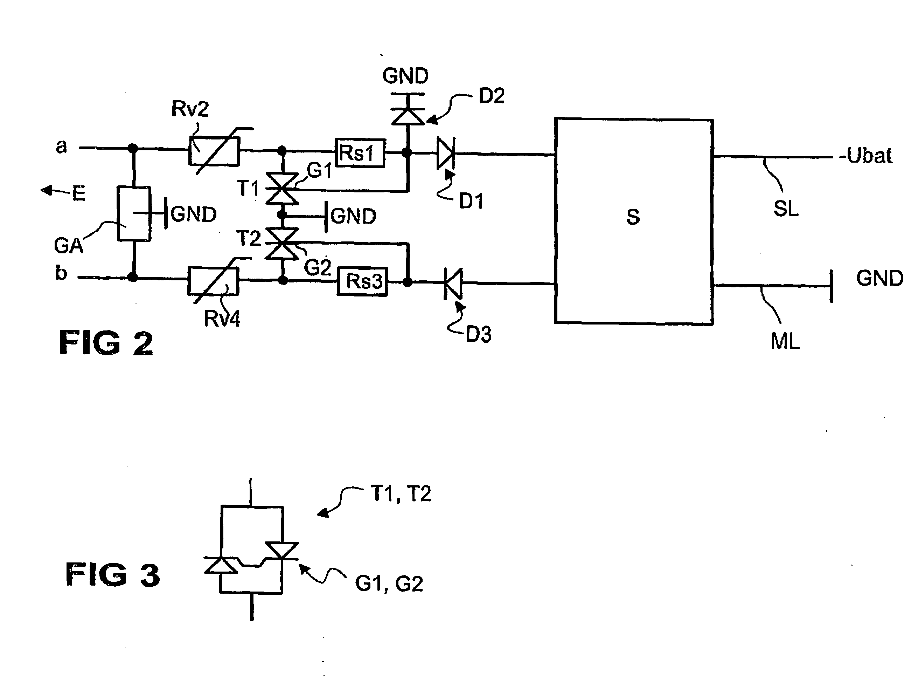

Figur 2 zeigt eine Schaltungsanordnung zum Schutz eines speisemoduls S, das über eine erste Ader a und über eine zweite Ader b eine abgesetzte Einrichtung E mit Energie versorgt in einer ersten Ausführungsform der Erfindung. Wie der in Figur 1 dargestellte Stand der Technik ist die Ausführungsform von Figur 2 für einen Betrieb optimiert, bei welchem die erste Ader a über eine Speiseleitung SL und eine Halbleiterschaltung im Innern des Speisemoduls S mit einer negativen Spannung gespeist wird, während die zweite Ader b über einen elektrischen Widerstand (nicht abgebildet) in einem Speisemodul S mit der Masse GND verbunden ist, wie dies zum Beispiel bei ISDN Einrichtungen der Fall ist. Ebenso verfügt die in Figur 2 dargestellte Ausführungsform über einen Gasableiter GA, welcher dazu dient, sehr hohe Fremdspannungen und sehr starke Fremdströme abzubauen.

Im Unterschied zu dem in Figur 1 dargestellten Stand der Technik, verfügt die in Figur 2 dargestellte Ausführungsform jedoch über ein in Richtung abgesetzte Einrichtung E hinter einem ersten Widerstandselement Rs1 angeordnetes erstes Schaltelement T1, welches die erste Ader a in eingeschaltetem zustand mit der Masse GND verbindet. Das erste Schaltelement T1 verfügt dazu über einen ersten Gate-Anschluss G1 zum Schalten des ersten Schaltelementes T1, welcher an die erste Ader a in Richtung abgesetzte Einrichtung vor dem ersten Widerstandselement Rs1 angeschlossen ist. Das erste Schaltelement T1 wird eingeschaltet, wenn der Betrag der Spannung über dem ersten Schaltelement T1 zwischen dem ersten Gate-Anschluss G1 und dem Anschluss des ersten Schaltelementes T1 an die erste Ader a einen ersten Schwellwert übersteigt.

Um das Speisemodul vor einer negativen Fremdspannung auf der ersten Ader a zu schützen, welche nicht über das erste Schaltelement T1 abgebaut werden, zum Beispiel weil die negative Fremdspannung zu gering ist oder weil die Fremdspannung zu schnell ansteigt, als dass das erste Schaltelement T1 einschalten würde, ist auf der ersten Ader a in Richtung zu der abgesetzten Einheit vor dem ersten Widerstandselement RS1 eine Diode D1 angeordnet, welche elektrischen Strom von dem Speisemodul S in Richtung abgesetzte Einheit E blockiert.

Um das Speisemodul S vor positiven Spannungen zu schützen, ist auf der ersten Ader a in Richtung abgesetzte Einrichtung E vor dem ersten Widerstandselement Rs1 zudem eine Diode D2 angeordnet, welche die erste Ader a mit der Masse verbindet. Im Falle eines starken elektrischen Stromes durch die zweite Diode D2 entsteht zudem über dem ersten Widerstandselement Rs1 eine erhöhte Spannung, welche zu einem Einschalten des ersten Schaltelementes T1 führt. Dadurch wird das erste Widerstandselement Rs1 und die zweite Diode D2 von dem elektrischen Strom entlastet, wodurch deren Zerstörung im Falle von starken und/oder langandauernden Strömen vermieden wird.

Um die beim Abbau von Fremdspannungen über das erste Schaltelement T1 und die zweite Diode D2 entstehenden Fremdströme gezielt in Wärme umzusetzen, ist in die erste Ader a ein in Richtung zu der abgesetzten Einheit E hinter dem ersten Schaltelement T1 angeordnetes zweites Widerstandselement Rv2 geschaltet.

Die in Figur 2 dargestellte Ausführungsform verfügt über ein in Richtung abgesetzte Einrichtung E hinter einem dritten Widerstandselement Rs3 angeordnetes zweites Schaltelement T2, welches die zweite Ader b in eingeschaltetem Zustand mit der Masse GND verbindet. Das zweite Schaltelement T2 verfügt dazu über einen zweiten Gate-Anschluss G2 zum Schalten des zweiten Schaltelementes T2, welcher an die zweite Ader b in Richtung abgesetzte Einrichtung vor dem dritten Widerstandselement Rs3 angeschlossen ist. Das zweite Schaltelement T2 wird eingeschaltet, wenn der Betrag der Spannung über dem zweiten Schaltelement T2 zwischen dem zweiten Gate-Anschluss G2 und dem Anschluss des zweiten Schaltelementes T2 an die zweite Ader b einen zweiten Schwellwert übersteigt.

Um das Speisemodul S vor einer positiven Fremdspannung auf der zweiten Ader b zu schützen, welche nicht über das zweite Schaltelement T2 abgebaut wird, zum Beispiel weil die positive Fremdspannung zu gering ist oder weil die positive Fremdspannung zu schnell ansteigt als dass das zweite Schaltelement T2 einschalten würde, ist auf der zweiten Ader b in Richtung zu der abgesetzten Einheit vor dem dritten Widerstandselement Rs3 eine dritte Diode D3 angeordnet, welche elektrischen Strom von dem Speisemodul S in Richtung abgesetzte Einheit E blockiert.

Um die beim Abbau von Fremdspannungen über das zweite Schaltelement T2 entstehenden Fremdströme gezielt in Wärme umzusetzen, ist in die zweite Ader b ein in Richtung zu der abgesetzten Einheit E hinter dem zweiten Schaltelement T2 angeordnetes viertes Widerstandselement Rv4 geschaltet.

Das erste Schaltelement T1 kann zum Beispiel ein Thyristor sein, welcher so verschaltet ist, dass er in eingeschaltetem Zustand negative Spannungen auf der ersten Ader a abbaut. Besonders vorteilhaft ist jedoch die in Figur 3 dargestellte Anordnung des ersten Schaltelementes T1 und/oder des zweiten Schaltelementes T2 aus zwei antiparallel geschalteten Thyristoren, welches einen Stromfluss in beide Richtungen zulässt.

Typischerweise sollte das erste Widerstandselement Rs1 und das dritte Widerstandselement Rs3 einen geringen elektrischen Widerstand aufweisen, während das zweite Widerstandselement Rv2 und das vierte Widerstandselement Rv4 einen im Vergleich dazu grossen elektrischen Widerstand aufweisen sollte. Von Vorteil ist für das zweite Widerstandselement Rv2 und für das vierte Widerstandselement Rv4 insbesondere die Verwendung von Widerstandselementen mit einem positiven Temperaturkoeffizienten, welche während des regulären Betriebs einen geringen elektrischen Widerstand aufweisen, um die Speiseperformance und eine Signalübertragung nicht negativ zu beeinträchtigen, welche jedoch bei einer Erwärmung durch einen Fremdstrom einen hohen elektrischen Widerstand aufweisen.

Die in Figur 3 dargestellte Ausführungsform kann als dreistufiger Schutz auf jeder Ader a, b des Speisemoduls S angesehen werden. Die erste Stufe stellt der Gasableiter GA dar und schützt vor besonders starken Fremdspannungen und Fremdströmen. Die zweite Stufe setzt sich n. aus den vier Widerstandselementen Rs1, Rv2, Rs3, Rv4, den beiden Schaltelementen T1, T2, und der zweiten Diode D2 zusammen und schützt Spannungen und Fremdströmen, für welche der Gasableiter GA nicht schaltet und dient zu der Entlastung der dritten Stufe. Die zweite Stufe kann, wie in den Patentansprüchen und in der Beschreibung dargestellt in Unterstufen aufgeteilt werden. Die dritte Stufe besteht aus der ersten Diode D1 und/oder der dritten Diode D3 und dient dazu eine Spannungsumkehr, insbesondere eine kurzfristige Spannungsumkehr aufgrund der endlichen Reaktionszeit der zweiten Stufe, über dem Speisemodul zu verhindern.

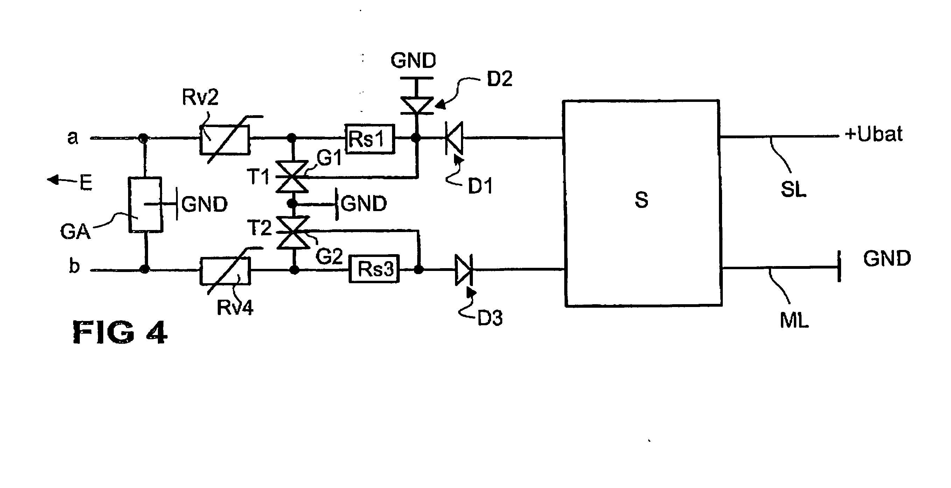

Figur 4 zeigt eine Schaltungsanordnung zum Schutz eines Speisemoduls S, das über eine erste Ader a und über eine zweite Ader b eine abgesetzte Einrichtung E mit Energie versorgt in einer zweiten Ausführungsform der Erfindung. Im Gegensatz zu der in Figur 2 vorgestellten Ausführungsform ist diese Schaltungsanordnung für einen Betrieb optimiert, bei welchem die erste Ader a über eine Speiseleitung SL und eine Halbleiterschaltung im Innern des Speisemoduls S mit einer positiven Spannung gespeist wird, während die zweite Ader b über einen elektrischen widerstand in einem Speisemodul S mit der Masse GND verbunden ist. Damit die Schaltungsanordnung das Speisemodul S effektiv vor Fremdspannungen schützt, sind in analoger Funktionsweise zu der in Figur 2 dargestellten Ausführungsform die erste Diode D1, die zweite Diode D2 und die dritte Diode D3 am selben Ort wie in der in Figur 2 dargestellten Ausführungsform, jedoch in umgekehrter Polung an die erste Ader a und die zweite Ader b angeschlossen.

Für ein besseres Verständnis der Erfindung, jedoch ohne Einschränkung deren Schutzumfanges werden im folgenden mögliche Kenngrössen von auf dem Markt erhältlichen Bauteilen für die erste Ausführungsform näher spezifiziert:

Der Gasableiter schaltet je nach Anstiegsdauer der Fremdspannung typischerweise bei einer Spannung zwischen 400 V und 1000 V ein. Die erste Diode D1, die zweite Diode D2 und die dritte Diode D3 weisen eine Durchbruchspannung in der Grössenordnung von einigen hundert bis einigen tausend Volt. Das erste Schaltelement T1 und das zweite Schaltelement T2 bestehen jeweils aus zwei antiparallel verschalteten Thyristoren. Die Thyristoren verfügen über eine Durchbruchspannung zwischen Anode und Kathode von 200 V und über eine Spannungsschwelle zwischen dem Gate und der Anode, respektive zwischen dem Gate und der Kathode von 0.7 V. Das erste Widerstandselement Rs1 und das dritte Widerstandselement Rs3 verfügen über einen elektrischen Widerstand im einstelligen Ohmbereich. Das zweite Widerstandselement Rv2 und das vierte Widerstandselement Rv4 verfügen bei Betriebstemperatur über einen elektrischen Widerstand im Ohmbereich, bei einer Erwärmung jedoch im Megaohmbereich.

### Liste der verwendeten Bezugszeichen

- a: Erste Ader
- b: Zweite Ader
- B: Beschleunigerschaltung
- D: Gleichrichtelement, Diode
- D1: Erstes Gleichrichtelement, Erste Diode, Gleichrichtelement, Diode
- D2: Zweites Gleichrichtelement, Zweite Diode, Gleichrichtelement, Diode
- D3: Drittes Gleichrichtelement, Dritte Diode, Gleichrichtelement, Diode
- E: Abgesetzte Einheit
- G1: Erster Gate-Anschluss, Erster Anschluss, Anschluss
- G2: Zweiter Gate-Anschluss, Zweiter Anschluss, Anschluss
- GA: Gasableiter
- GND: Masse
- ML: Masseleitung
- Rv: Widerstandselement
- Rs1: Erstes Widerstandselement, Widerstandselement
- Rv2: Zweites Widerstandselement, Widerstandselement
- Rs3: Drittes Widerstandselement, Widerstandselement
- Rv4: Viertes Widerstandselement, Widerstandselement
- S: Speisemodul
- SL: Speiseleitung
- T: Schaltelement, Thyristor, Trisil
- T1: Erstes Schaltelement, Schaltelement, Thyristor, Trisil
- T2: Zweites Schaltelement, Schaltelement, Thyristor, Trisil

## Patentansprüche

1. Schaltungsanordnung zum Schutz eines Speisemoduls (S), das über eine erste Ader (a) und über eine zweite Ader (b) eine abgesetzte Einrichtung (E) mit Energie versorgt, umfassend
- ein in die erste Ader (a) geschaltetes erstes Widerstandselement (Rs1);
- ein in Richtung abgesetzte Einrichtung (E) hinter dem ersten Widerstandselement (Rs1) angeordnetes erstes Schaltelement (T1), welches in eingeschaltetem Zustand für elektrischen Strom von der Masse (GND) zu der ersten Ader (a) leitend ist; wobei
- das erste Schaltelement (T1) einen ersten Anschluss (G1) zum Schalten des ersten Schaltelementes (T1) umfasst, welcher an die erste Ader (a) in Richtung abgesetzte Einrichtung (E) vor dem ersten Widerstandselement (Rs1) angeschlossen ist; und
- das erste Schaltelement (T1) eingeschaltet wird, wenn der Absolutwert der Spannung über dem ersten Widerstandselement (Rs1) einen ersten Schwellwert übersteigt;
**dadurch gekennzeichnet, dass**
- ein in Richtung abgesetzte Einrichtung vor dem ersten Widerstandselement (Rs1) angeordnetes erstes Gleichrichtelement (D1) in die erste Ader (a) geschaltet ist, welches elektrischen Strom in Richtung zu der abgesetzten Einheit (E) blockiert.

2. Schaltungsanordnung nach Anspruch 1, wobei ein in Richtung abgesetzte Einrichtung (E) nach dem ersten Gleichrichtelement (D1) angeordnetes zweites Gleichrichtelement (D2) an die erste Ader (a) angeschlossen und mit der Masse (GND) verbunden ist, wobei das zweite Gleichrichtelement (D2) elektrischen Strom in Richtung von der Masse (GND) zu der ersten Ader (a) blockiert.

3. Schaltungsanordnung nach Anspruch 1 oder 2, wobei ein drittes Gleichrichtelement (D3) in die zweite Ader (b) geschaltet ist, welches elektrischen Strom in Richtung zum Speisemodul (S) blockiert.

4. Schaltungsanordnung zum Schutz eines Speisemoduls (S), das über eine erste Ader (a) und über eine zweite Ader (b) eine abgesetzte Einrichtung (E) mit Energie versorgt, umfassend
- ein in die erste Ader (a) geschaltetes erstes Widerstandselement (Rs1);
- ein in Richtung abgesetzte Einrichtung (E) hinter dem ersten Widerstandselement (Rs1) angeordnetes erstes Schaltelement (T1), in eingeschaltetem Zustand für elektrischen Strom von der ersten Ader (a) zu der Masse (GND) leitend ist; wobei
- das erste Schaltelement (T1) einen ersten Anschluss (G1) zum Schalten des ersten Schaltelementes (T1) umfasst, welcher an die erste Ader (a) in Richtung abgesetzte Einrichtung (E) vor dem ersten Widerstandselement (Rs1) angeschlossen ist; und
- das erste Schaltelement (T1) eingeschaltet wird, wenn der Absolutwert der Spannung über dem ersten Widerstandselement (Rs1) einen ersten Schwellwert übersteigt;
**dadurch gekennzeichnet, dass**
- ein in Richtung abgesetzte Einrichtung (E) vor dem ersten Widerstandselement (Rs1) angeordnetes erstes Gleichrichtelement (D1) in die erste Ader (a) geschaltet ist, welches elektrischen Strom in Richtung zu dem Speisemodul (S) blockiert.

5. Schaltungsanordnung nach Anspruch 4, wobei ein in Richtung abgesetzte Einrichtung (E) nach dem ersten Gleichrichtelement (D1) angeordnetes zweites Gleichrichtelement (D2) an die erste Ader (a) angeschlossen und mit der Masse (GND) verbunden ist, wobei das zweite Gleichrichtelement (D2) elektrischen Strom in Richtung von der ersten Ader (a) zu der Masse (GND) blockiert.

6. Schaltungsanordnung nach Anspruch 4 oder 5, wobei ein drittes Gleichrichtelement (D3) in die zweite Ader (b) geschaltet ist, welches elektrischen Strom in Richtung zu der abgesetzten Einheit (E) blockiert.

7. Schaltungsanordnung nach einem der vorangehenden Ansprüche, wobei
in Richtung abgesetzte Einrichtung (E) hinter dem ersten Schaltelement (T1) ein in die erste Ader (a) geschaltetes zweites Widerstandselement (Rv2) angeordnet ist.

8. Schaltungsanordnung nach Anspruch 3, 6, 7 oder 8, zusätzlich umfassend
- ein in die zweite Ader (b) geschaltetes und in Richtung abgesetzte Einrichtung (E) hinter dem dritten Gleichrichtelement (D3) angeordnetes drittes Widerstandselement (Rs3);
- ein in Richtung abgesetzte Einrichtung (E) hinter dem dritten Widerstandselement (Rs3) mit der zweiten Ader (b) verbundenes zweites Schaltelement (T2), welches in eingeschaltetem Zustand für elektrischen Strom von der Masse (GND) zu der zweiten Ader (b) und/oder für elektrischen Strom von der zweiten Ader (b) zu der Masse (GND) leitend ist, wobei
- das zweite Schaltelement (T2) einen zweiten Anschluss (G2) zum Schalten des zweiten Schaltelementes (T2) umfasst, welches an die zweite Ader (b) in Richtung abgesetzte Einrichtung (E) vor dem dritten Widerstandselement (Rs3) angeschlossen ist;
- das zweite Schaltelement (T2) eingeschaltet wird, wenn der Absolutwert der Spannung über dem dritten Widerstandselement (Rs3) einen zweiten Schwellwert übersteigt.

9. Schaltungsanordnung nach Anspruch 8, wobei in Richtung abgesetzte Einrichtung (E) hinter dem zweiten Schaltelement (T2) ein in die zweite Ader (b) geschaltetes viertes Widerstandselement (Rv4) angeordnet ist;

10. Schaltungsanordnung nach einem der vorangehenden Ansprüche, wobei ein mit der Masse (GND) verbundener Gasableiter (GA) in Richtung abgesetzte Einrichtung hinter mindestens einem der Schaltelemente (T1, T2) an die erste Ader angeschlossen ist.

11. Schaltungsanordnung nach einem der vorangehenden Ansprüche, wobei
mindestens eines der Schaltelemente (T1, T2) einen Thyristor und/oder zwei antiparallel geschaltete Thyristoren und/oder ein Trisil und/oder zwei antiparallel geschaltete Trisile umfasst.

12. Schaltungsanordnung nach einem der vorangehenden Ansprüche,
**dadurch gekennzeichnet, dass**
mindestens eines der Gleichrichtelemente (D1, D2, D3) eine Diode umfasst.

13. Schaltungsanordnung nach Anspruch 7,
**dadurch gekennzeichnet, dass**
das erste Widerstandselement (Rs1) und das dritte Widerstandselement (Rs3) einen im wesentlichen gleichen elektrischen Widerstand aufweisen und/oder dass das erste Gleichrichtelement und das dritte Gleichrichtelement einen im wesentlichen gleichen elektrischen Widerstand aufweisen.

14. Schaltungsanordnung nach einem der vorangehenden Ansprüche,
**dadurch gekennzeichnet, dass**
das erste Schaltelement T1 in eingeschaltetem Zustand für elektrischen Strom von der Masse (GND) zu der ersten Ader (a) und von der ersten Ader (a) zu der Masse (GND) leitend ist.

## Claims

1. Circuit arrangement for protecting a power supply module (S) which supplies power to a remote device (E) via a first wire (a) and via a second wire (b), comprising
- a first resistance element (Rs1) which is connected to the first wire (a);
- a first switching element (T1) which is arranged downstream of the first resistance element (Rs1) in the direction of the remote device (E) and which, in the on state, conducts electric current from earth (GND) to the first wire (a); wherein
- the first switching element (T1) comprises a first connection (G1) for switching the first switching element (T1), which first connection is connected to the first wire (a) upstream of the first resistance element (Rs1) in the direction of the remote device (E); and
- the first switching element (T1) is switched on if the absolute value of the voltage across the first resistance element (Rs1) exceeds a first threshold value;
**characterized in that**
- a first rectification element (D1) which is arranged upstream of the first resistance element (Rs1) in the direction of the remote device is connected to the first wire (a) and blocks electric current in the direction of the remote unit (E).

2. Circuit arrangement according to Claim 1, wherein a second rectification element (D2) which is arranged downstream of the first rectification element (D1) in the direction of the remote device (E) is connected to the first wire (a) and is connected to earth (GND), wherein the second rectification element (D2) blocks electric current in the direction from earth (GND) to the first wire (a).

3. Circuit arrangement according to Claim 1 or 2, wherein a third rectification element (D3) is connected to the second wire (b) and blocks electric current in the direction of the power supply module (S).

4. Circuit arrangement for protecting a power supply module (S) which supplies power to a remote device (E) via a first wire (a) and via a second wire (b), comprising
- a first resistance element (Rs1) which is connected to the first wire (a);
- a first switching element (T1) which is arranged downstream of the first resistance element (Rs1) in the direction of the remote device (E) and which, in the on state, conducts electric current from the first wire (a) to earth (GND); wherein
- the first switching element (T1) comprises a first connection (G1) for switching the first switching element (T1), which first connection is connected to the first wire (a) upstream of the first resistance element (Rs1) in the direction of the remote device (E); and
- the first switching element (T1) is switched on if the absolute value of the voltage across the first resistance element (Rs1) exceeds a first threshold value;
**characterized in that**
- a first rectification element (D1) which is arranged upstream of the first resistance element (Rs1) in the direction of the remote device (E) is connected to the first wire (a) and blocks electric current in the direction of the power supply module (S).

5. Circuit arrangement according to Claim 4, wherein a second rectification element (D2) which is arranged downstream of the first rectification element (D1) in the direction of the remote device (E) is connected to the first wire (a) and is connected to earth (GND), wherein the second rectification element (D2) blocks electric current in the direction from the first wire (a) to earth (GND).

6. Circuit arrangement according to Claim 4 or 5, wherein a third rectification element (D3) is connected to the second wire (b) and blocks electric current in the direction of the remote unit (E).

7. Circuit arrangement according to one of the preceding claims, wherein
a second resistance element (Rv2) which is connected to the first wire (a) is arranged downstream of the first switching element (T1) in the direction of the remote device (E).

8. Circuit arrangement according to Claim 3, 6, 7 or 8, additionally comprising
- a third resistance element (Rs3) which is connected to the second wire (b) and which is arranged downstream of the third rectification element (D3) in the direction of the remote device (E);
- a second switching element (T2) which is connected to the second wire (b) downstream of the third resistance element (Rs3) in the direction of the remote device (E) and which, in the on state, conducts electric current from earth (GND) to the second wire (b) and/or conducts electric current from the second wire (b) to earth (GND), wherein
- the second switching element (T2) comprises a second connection (G2) for switching the second switching element (T2), which second connection is connected to the second wire (b) upstream of the third resistance element (Rs3) in the direction of the remote device (E);
- the second switching element (T2) is switched on if the absolute value of the voltage across the third resistance element (Rs3) exceeds a second threshold value.

9. Circuit arrangement according to Claim 8, wherein a fourth resistance element (Rv4) which is connected to the second wire (b) is arranged downstream of the second switching element (T2) in the direction of the remote device (E).

10. Circuit arrangement according to one of the preceding claims, wherein a gas dissipator (GA) which is connected to earth (GND) is connected to the first wire downstream of at least one of the switching elements (T1, T2) in the direction of the remote device.

11. Circuit arrangement according to one of the preceding claims, wherein
at least one of the switching elements (T1, T2) comprises a thyristor and/or two reverse-connected parallel thyristors and/or a Trisil and/or two reverse-connected parallel Trisils.

12. Circuit arrangement according to one of the preceding claims,
**characterized in that**
at least one of the rectification elements (D1, D2, D3) comprises a diode.

13. Circuit arrangement according to Claim 7,
**characterized in that**
the first resistance element (Rs1) and the third resistance element (Rs3) have essentially the same electrical resistance and/or **in that** the first rectification element and the third rectification element have essentially the same electrical resistance.

14. Circuit arrangement according to one of the preceding claims,
**characterized in that**
the first switching element T1, in the on state, conducts electric current from earth (GND) to the first wire (a) and from the first wire (a) to earth (GND).

## Revendications

1. Agencement de circuit pour la protection d'un module d'alimentation (S) qui alimente un dispositif distant (E) en énergie via un premier conducteur (a) et via un deuxième conducteur (b), comprenant
- un premier élément de résistance (Rs1) monté sur le premier conducteur (a),
- un premier élément de commutation (T1) situé en aval du premier élément de résistance (Rs1) en direction du dispositif distant (E) et qui, à l'état enclenché, est conducteur pour un courant électrique de la masse (GND) vers le premier conducteur (a),
- le premier élément de commutation (T1) comprenant un premier raccordement (G1) pour commuter le premier élément de commutation (T1), lequel raccordement est connecté au premier conducteur (a) en amont du premier élément de résistance (Rs1) en direction du dispositif distant (E) et
- le premier élément de commutation (T1) étant enclenché lorsque la valeur absolue de la tension dans le premier élément de résistance (Rs1) dépasse une première valeur seuil,
**caractérisé en ce que**
- un premier élément redresseur (D1) situé en amont du premier élément de résistance (Rs1) en direction du dispositif distant, lequel bloque un courant électrique en direction de l'unité distante (E), est monté sur le premier conducteur (a).

2. Agencement de circuit selon la revendication 1, un deuxième élément redresseur (D2) situé en aval du premier élément redresseur (D1) en direction du dispositif distant (E) étant connecté au premier conducteur (a) et relié à la masse (GND), le deuxième élément redresseur (D2) bloquant un courant électrique allant du premier conducteur (a) vers la masse (GND).

3. Agencement de circuit selon la revendication 1 ou 2, un troisième élément redresseur (D3) qui bloque un courant électrique allant vers le module d'alimentation (S) étant monté sur le deuxième conducteur (b).

4. Agencement de circuit pour la protection d'un module d'alimentation (S) qui alimente un dispositif distant (E) en énergie via un premier conducteur (a) et via un deuxième conducteur (b), comprenant
- un premier élément de résistance (Rs1) monté sur le premier conducteur (a),
- un premier élément de commutation (T1) situé en aval du premier élément de résistance (Rs1) en direction du dispositif distant (E) et qui, à l'état enclenché, est conducteur pour un courant électrique du premier conducteur (a) vers la masse (GND),
- le premier élément de commutation (T1) comprenant un premier raccordement (G1) pour commuter le premier élément de commutation (T1), lequel raccordement est connecté au premier conducteur (a) en amont du premier élément de résistance (Rs1) en direction du dispositif distant (E) et
- le premier élément de commutation (T1) étant enclenché lorsque la valeur absolue de la tension dans le premier élément de résistance (Rs1) dépasse une première valeur seuil,
**caractérisé en ce que**
un premier élément redresseur (D1) situé en amont du premier élément de résistance (Rs1) en direction du dispositif distant (E), lequel bloque un courant électrique en direction du module d'alimentation (S), est monté sur le premier conducteur (a).

5. Agencement de circuit selon la revendication 4, un deuxième élément redresseur (D2) situé en aval du premier élément redresseur (D1) en direction du dispositif distant (E) étant connecté au premier conducteur (a) et relié à la masse (GND), le deuxième élément redresseur (D2) bloquant un courant électrique allant du premier conducteur (a) vers la masse (GND).

6. Agencement de circuit selon la revendication 4 ou 5, un troisième élément redresseur (D3) qui bloque un courant électrique allant vers l'unité distante (E) étant monté sur le deuxième conducteur (b).

7. Agencement de circuit selon l'une des revendications précédentes, un deuxième élément de résistance (Rv2) monté sur le premier conducteur (a) étant situé en aval du premier élément de commutation (T1) en direction du dispositif distant (E).

8. Agencement de circuit selon la revendication 3, 6, 7 ou 8, comprenant additionnellement
- un troisième élément de résistance (Rs3) monté sur le deuxième conducteur (b) et situé en aval du troisième élément redresseur (D3) en direction du dispositif distant (E),
- un deuxième élément de commutation (T2) relié au deuxième conducteur (b) en aval du troisième élément de résistance (Rs3) en direction du dispositif distant (E) et qui, à l'état enclenché, est conducteur pour un courant électrique de la masse (GND) vers le deuxième conducteur (b) et/ou pour un courant électrique du deuxième conducteur (b) vers la masse (GND),
- le deuxième élément de commutation (T2) comprenant un deuxième raccordement (G2) pour commuter le deuxième élément de commutation (T2), lequel est connecté au deuxième conducteur (b) en amont du troisième élément de résistance (Rs3) en direction du dispositif distant (E) et
- le deuxième élément de commutation (T2) étant enclenché lorsque la valeur absolue de la tension dans le troisième élément de résistance (Rs3) dépasse une deuxième valeur seuil.

9. Agencement de circuit selon la revendication 8, un quatrième élément de résistance (Rv4) monté sur le deuxième conducteur (b) étant situé en aval du deuxième élément de commutation (T2) en direction du dispositif distant (E).

10. Agencement de circuit selon l'une des revendications précédentes, un dispositif d'arrêt de gaz (GA) relié à la masse (GND) étant connecté au premier conducteur en aval d'au moins l'un des éléments de commutation (T1, T2) en direction du dispositif distant.

11. Agencement de circuit selon l'une des revendications précédentes, au moins l'un des éléments de commutation (T1, T2) comprenant un thyristor et/ou deux thyristors montés en antiparallèle et/ou une trisil et/ou deux trisils montées en antiparallèle.

12. Agencement de circuit selon l'une des revendications précédentes, **caractérisé en ce qu'**au moins l'un des éléments redresseurs (D1, D2, D3) comprend une diode.

13. Agencement de circuit selon la revendication 7, **caractérisé en ce que** le premier élément de résistance (Rs1) et le troisième élément de résistance (Rs3) présentent une résistance électrique sensiblement égale et/ou **en ce que** le premier élément redresseur et le troisième élément redresseur présentent une résistance électrique sensiblement égale.

14. Agencement de circuit selon l'une des revendications précédentes, **caractérisé en ce que** le premier élément de commutation T1, à l'état enclenché, est conducteur pour un courant électrique allant de la masse (GND) vers le premier conducteur (a) et du premier conducteur (a) vers la masse (GND).
